# EUROPEAN PATENT APPLICATION

(11) **EP 4 674 694 A1**
(43) Date of publication of application: **07.01.2026**
(21) Application number: 23924486.6
(22) Date of filing: 01.03.2023
(51) Int. Cl.: B60R 11/04, B60N 3/10

(54) **INTERIOR PART CONTROL DEVICE AND INTERIOR PART CONTROL METHOD**

(71) Applicant: Nissan Motor Co., Ltd., Kanagawa 221-0023 (JP)
(72) Inventor: MARUO, Shunsuke, Atsugi-shi, Kanagawa 243-0123 (JP); KINOSHITA, Yuki, Atsugi-shi, Kanagawa 243-0123 (JP)
(74) Representative: Osha BWB
(86) International application number: PCT/JP2023/007618
(87) International publication number: WO 2024/180731

(57) **Abstract**

An interior component control device that controls an interior component disposed in a vehicle interior includes an image obtaining unit 71 that obtains a captured image from a camera that captures an image of the vehicle interior, an identification unit 72 that identifies an action of an occupant from the captured image, and a notification control unit 73 that controls a notification device that is disposed corresponding to the interior component and outputs a notification recognizable by the occupant. The notification control unit 73 outputs a notification command to the notification device to perform the notification when the action identified by the identification unit 72 is a specific action for the interior component.

## Description

### Technical Field

The present invention relates to an interior component control device and an interior component control method.

### Background Art

There has been known a vehicle cup holder of a one-touch opening and closing operation type (e.g., Patent Document 1). When an occupant of a vehicle would like to house a beverage container in a housing portion with its cover opened in a dark place, such as a nighttime, the vehicle cup holder described in Patent Document 1 turns on an LED disposed in a lamp unit, widely diffuses a light emitted from the LED along a guide lens, and emits the light via an irradiation protrusion.

### Prior Art Document

### Patent Document

Patent Document 1: JP-T-2018-522781

### Summary of Invention

### Problems to Be Solved by Invention

In order to use the vehicle cup holder described in Patent Document 1 in a dark place, it is necessary for an occupant to perform an operation for turning on the LED besides an action of housing a beverage container in the housing portion of the cup holder, thereby posing a problem that an amount of time the occupant looks at an interior component, such as the cup holder, is increased.

An object to be solved by the present invention is to provide an interior component control device and an interior component control method that reduce an amount of time the interior component is looked at.

### Means for Solving Problems

The present invention solves the above-described problem by obtaining a captured image from a camera, identifying an action of an occupant from the captured image, controlling a notification device that is disposed corresponding to the interior component and outputs a notification recognizable by the occupant, and outputting a notification command to the notification device to perform the notification when the identified action is a specific action for the interior component.

### Effects of Invention

The present invention allows for a shortened amount of time the interior component is looked at.

### Brief Description of Drawings

FIG. 1 is a block diagram illustrating an exemplary interior component control system according to an embodiment.
FIG. 2 is a perspective view of an interior component in FIG. 1.
FIG. 3 is a flowchart showing controller control processing in FIG. 1.
FIG. 4 is a flowchart showing a subflow of Step S40 shown in FIG. 3.

### Modes for Carrying out the Invention

### First Embodiment

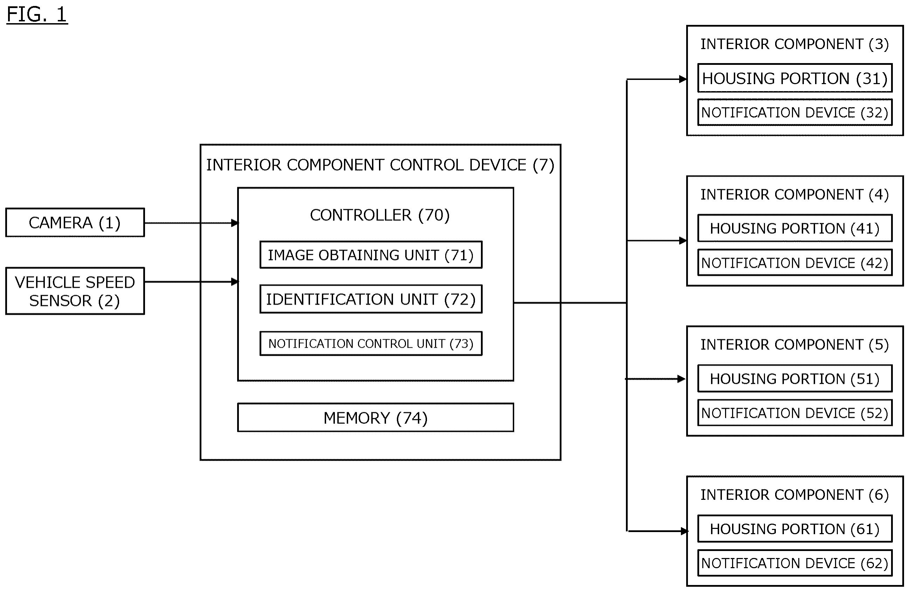

The following describes embodiments of the present invention on the basis of the drawings. FIG. 1 is a block diagram illustrating an exemplary interior component control system according to an embodiment. The interior component control system is a system disposed in a vehicle, which identifies an action of an occupant from a captured image of an onboard camera and controls notification devices disposed corresponding to onboard interior components such that a user can recognize positions of the onboard interior components in a vehicle interior, states of the onboard interior components, and the like corresponding to the identified action.

The onboard interior components are components used by occupants in the vehicle interior, such as cup holders. When an occupant places a beverage container held in his/her hand on a cup holder, or when the occupant takes out the beverage container held in the cup holder from the cup holder, the occupant moves a gaze direction to a location of the cup holder in order to obtain a location of the beverage container in the vehicle interior. When the vehicle interior is dark, such as a nighttime, or when the occupant is on a vehicle he/she is not used to use, it takes a while to obtain the location of the beverage container. For example, to obtain the location of the cup holder from a state where a driver looks ahead, the driver has an increased amount of time moving the gaze direction to a different direction from the forward direction, that is, averting the gaze direction from the original direction (hereinafter also referred to as an eye-off-road time). In order for the occupant to easily obtain the location of the cup holder in a dark place, a light may be installed in the cup holder. However, if an operation by the occupant is necessary to switch the light on and off, an operation load falls on the occupant, and the eye-off-road time is increased by the operation for switching on and off. Turning the cup holder light on and off in conjunction with on and off of power switches (an ignition switch, a main switch) of the vehicle can eliminate the operation of switching on and off of the light. However, the cup holder light is turned on for a long time even while the cup holder is not used by the occupant, which may affect driving of the driver, and should be avoided from an aspect of comfort in the vehicle interior.

The interior component control system according to the embodiment is provided with the notification devices so as to correspond to the onboard interior components, identifies an action of an occupant from a captured image of the onboard camera, and transmits a notification command for outputting a notification recognizable by the occupant to the notification device when the identified action is a specific action for the interior component. For example, when the specific action for the interior component is "an occupant is drinking with a beverage container in his/her hand," the interior component control system identifies the specific action by detecting a face and hands of the occupant, and the beverage container from the captured image. When the specific action is successfully identified, for example, so as to turn on lighting for a cup holder, the interior component control system transmits a notification command for turning on the lighting to a cup holder lighting device. This avoids a light emission period of the lighting for the cup holder becoming a long time when the vehicle interior is dark, and allows the occupant to easily obtain the location for the cup holder.

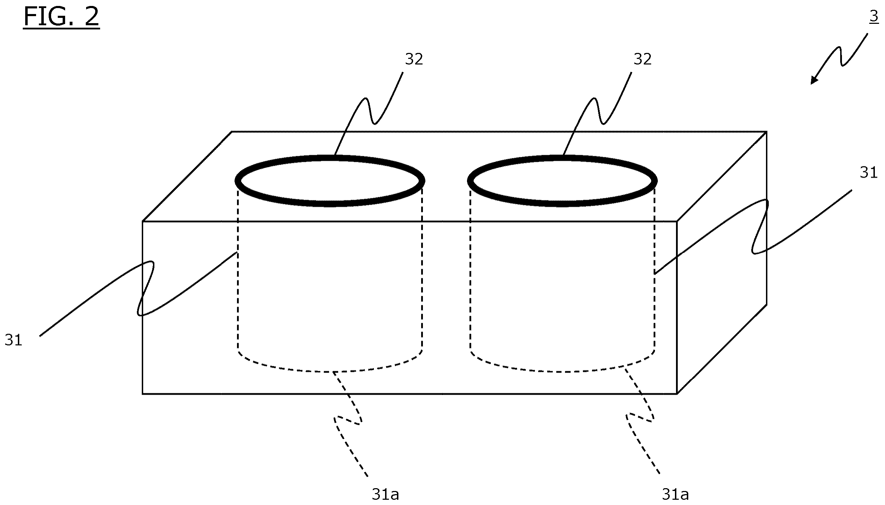

The following will describe each configuration included in the interior component control system according to the embodiment with reference to FIG. 1 and FIG. 2. FIG. 1 is a block diagram of each configuration of the interior component control system. FIG. 2 is a perspective view of an interior component 3. The interior component control system includes a camera 1, a vehicle speed sensor 2, the interior component 3 to an interior component 6, and an interior component control device 7.

The camera 1 is disposed in a vehicle, and is a camera that captures an image of a vehicle interior. The camera 1 is activated along with turning on of a power switch of the vehicle or an accessory power source, continuously captures images of the vehicle interior, and outputs the captured images to the interior component control device 7. Here, the accessory power source means a power source that operates while the power switch is off. The vehicle speed sensor 2 is a sensor that detects a vehicle speed of the vehicle, and outputs a detected value to the interior component control device 7.

The interior components 3 to 6 are disposed in a vehicle interior, and are onboard accessories (onboard parts) that place, hold, house, or support used objects of occupants. Alternatively, the interior components 3 to 6 are vehicle interior equipment, such as housing equipment and electrical devices. The used objects are objects picked up by the occupants' hands, food and drink put in mouths, and the like. The housing equipment is, for example, cup holders (bottle holders), ticket holders, overhead consoles, luggage hooks, dust boxes, glove compartments, and the like. The electrical devices are chargers having a wireless charging function, power sockets, interior lights (reading lights, footwell lights that illuminate foot areas of occupants), and the like. The interior components 3 to 6 are associated with the used objects of the occupants, and, for example, the interior components 3 to 6 are the cup holder (the bottle holder), the ticket holder, and the overhead console, the luggage hook, and the dust box, the associated used objects are a beverage container (a bottle), a ticket, glasses (sunglasses), a bag (or a sack) with a handle, and food and drink, respectively. When the interior components 3 to 6 are the charger having the wireless charging function, the power socket, and the interior lights (the reading lights), the associated used objects are an electronic device, such as a smart phone or a tablet, a cable having a socket connection connector, and a book. The interior components 3 to 6 may be disposed for a respective plurality of seats. For example, the interior component 3 is disposed at a driver's seat, the interior component 4 is disposed at a front passenger seat, the interior component 5 is disposed at a right rear seat, and the interior component is disposed at a left rear seat.

The interior components 3 to 6 have housing portions 31, 41, 51, 61 and notification devices 32, 42, 52, 62. The housing portions 31, 41, 51, 61 are main body portions that house beverage containers. The notification devices 32, 42, 52, 62 are devices that output notifications recognizable by occupants, which are display devices that emit visual notifications (lights), speakers that output auditory notifications (sounds), generators that generate olfactory notifications (scent, smell), or the like. The notification devices may be vibration generators that generate tactile notifications (vibration) or the like. That is, the notification devices 32 to 62 are devices for providing stimulations recognizable by occupants through at least one of the senses of visual, auditory, olfactory, and tactile. The notifications output from the notification devices 32, 42, 52, 62 are recognizable by at least one sense of visual, auditory, olfactory, or tactile of the occupants. The notification devices 32, 42, 52, 62 switch notifications on and off by notification commands received from a notification control unit 73. The notification devices 32 to 62 are disposed corresponding to the interior components 3 to 6 that are intended to be recognized by the occupant. For example, the notification device 32 disposed corresponding to the interior component 3 outputs a notification from the notification device 32, and thus, the occupants easily recognize a location of the interior component 3 and a state of the interior component 3. Note that, in the following description, the interior components 3 to 6 are exemplarily described as cup holders. The housing portion 31 is used as a typical example of the housing portions 31, 41, 51, 61, and the notification device 32 is used as a typical example of the notification devices 32, 42, 52, 62. The control over the notification device 32 by a controller 70 is also applicable to the notification devices 42, 52, 62.

As illustrated in FIG. 2, the housing portion 31 of the interior component 3 has a void portion 31a with an opening for holding a cylindrically-shaped container. Not limited to a plurality of the void portions 31a, but the void portion 31a may be one. The notification device 32 is a circular LED, and is disposed on an opening peripheral edge portion positioned on a top surface of the void portion 31a. Note that, not limited to the opening peripheral edge portion, the notification device 32 may be disposed on, for example, a bottom surface of the void portion 31a, a side wall of the housing portion 31 in a rectangular parallelepiped shape, or the like. Not limited to the housing portion 31, the notification device 32 may be disposed in a peripheral area of the interior component 3. The interior components 4 to 6 have a basic structure similar to that of the interior component 3, and their descriptions are omitted.

The interior component control device 7 identifies an action of the occupant from the captured image of the camera, and outputs a notification command for outputting a notification to the notification device 32 of the interior components 3 to 6 corresponding to the identification result. The interior component control device 7 has the controller 70 and a memory 74. The controller 70 has at least a function of obtaining a captured image, a function of identifying an action of an occupant, and a function of controlling the notification device 32, and has an image obtaining unit 71, an identification unit 72, and the notification control unit 73 as function blocks for the respective functions. The controller 70 has a processor and a memory storing programs. The respective functions are executed by processing the programs using the processor. Note that the controller 70 may have functions other than the image obtaining unit 71 and the like.

The image obtaining unit 71 obtains the captured image capturing an image of the vehicle interior from the camera 1. The identification unit 72 identifies an action of the occupant from the captured image. The action of the occupant identified by the identification unit 72 is identified by locations of parts of a body and hands, such as hands, eyes, and a mouth of the occupant, movements of the parts, a facial expression, a frame of the occupant, and the like. The identification unit 72 executes image processing on the captured image, and extracts the location of the parts of the body and hands, and/or the movements of the parts, which are specifically actions performed by the occupant for the cup holder, that are, an action of moving a beverage container to the cup holder, an action of taking out the beverage container from the cup holder, an action of drinking a beverage from the beverage container, and the like.

The identification unit 72 identifies a used object (an object) of the occupant from the captured image. For example, when the occupant is drinking a beverage from a beverage container, the identification unit 72 identifies the beverage container as the used object of the occupant.

The identification unit 72 identifies states of the interior components 3 to 6. The states of the interior components 3 to 6 are states where the used objects are held in the interior components 3 to 6. The identification unit 72 extracts the locations of the used objects with respect to the interior components 3 to 6 and inclinations of the used objects from the captured image. When the used objects are held in the interior components 3 to 6, the identification unit 72 determines the states of the interior components 3 to 6 from the extracted locations and inclinations of the used objects. The identification unit 72 determines whether the used objects are held in normal states in the interior components 3 to 6 or not on the basis of the captured image. With reference to FIG. 2 as an example, when the beverage container as the used object is housed in the void portion 31a of the interior component (the cup holder) 3, and when the beverage container stands upright with respect to the void portion 31a, the identification unit 72 determines that the used object is held in the normal state in the interior component 3. On the other hand, when the beverage container is inclined with respect to the void portion 31a, the identification unit 72 determines that the used object is not held in the normal state in the interior component 3.

As another example, an example where the used object is a communication terminal, such as a smart phone, and the interior component is a wireless charger will be described. The identification unit 72 determines whether the used objects are held in normal states in the interior components 3 to 6 or not from the locations of the used objects with respect to the interior components 3 to 6 on the basis of the captured image. When the used objects are placed at chargeable locations on placement tables of the interior components 3 to 6, the identification unit 72 determines that the object is held by the interior component 3 in the normal state. When the used objects are displaced from the chargeable locations on the placement tables of the interior components 3 to 6, the identification unit 72 determines that the object is not held by the interior component 3 in the normal state.

The identification unit 72 may determine whether the states of the used objects with respect to the interior components 3 to 6 are the normal states or not corresponding to the locations and inclinations of the used objects when the used objects are moved to the interior components 3 to 6. The identification unit 72 extracts positional relations between the used objects and the interior components 3 to 6 from the captured image before the used objects are housed in the interior components to determine whether the used objects are normally housed in the interior components 3 to 6 or not. With reference to FIG. 2 as an example, when the location of the beverage container is an upper portion of the void portion 31a, the identification unit 72 determines that the used object is in the normal state with respect to the interior component 3. On the other hand, when the location of the beverage container is displaced from the upper portion of the void portion 31a, the identification unit 72 determines that the used object is not in the normal state with respect to the interior component 3. The identification unit 72 may extract an inclination relation between the used objects and the interior components 3 to 6 from the captured image before the used objects are housed in the interior components, and determine whether the used objects are normally housed in the interior components 3 to 6 or not. With reference to FIG. 2 as an example, when the inclination of the beverage container is parallel to the inclination of the void portion 31a, the identification unit 72 determines that the used object is in the normal state with respect to the interior component 3. That is, when a center axis of the cylindrically-shaped void portion 31a and a center axis of the pipe-shaped beverage container are parallel, the identification unit 72 determines that the used object is in the normal state with respect to the interior component 3. On the other hand, when the inclination of the beverage container is not parallel to the inclination of the void portion 31a, the identification unit 72 determines that the used object is not in the normal state with respect to the interior component 3. The identification unit 72 may determine whether the used object is in the normal state with respect to the interior component 3 or not on the basis of both the location and inclination of the used object.

The identification unit 72 may identify a location of the occupant who has performed the action, an illuminance in the vehicle interior, a facial state of the occupant, and the like from the captured image. Note that the illuminance in the vehicle interior may be detected by an illuminance sensor instead of the camera 1.

The notification control unit 73 determines whether the action identified by the identification unit 72 is a specific action for the interior components 3 to 6 or not, and when the identified action is determined to be the specific action for the interior components 3 to 6, a notification command to give a notification recognizable by the occupant is output to the notification device 32. The specific actions are actions performed by the occupants to use the interior components 3 to 6 and/or preparation actions to use the interior components 3 to 6. For example, when the occupant uses the cup holder, actions, such as the occupant holding the beverage container in his/her hand to move it to the cup holder, reaching his/her hand toward the beverage container held in the cup holder, grabbing the beverage container held in the cup holder with his/her hand, or moving the beverage container grabbed in his/her hand from the cup holder correspond to the specific actions. When the occupant is drinking a beverage from the beverage container, it is expected that thereafter the occupant puts the beverage container in the cup holder, and therefore, an action of grabbing the beverage container in his/her hand and drinking corresponds to the specific action (preparation action).

Action data indicative of the specific actions is associated with the interior components 3 to 6 as control targets of the notification control unit 73 and saved in the memory 74. For example, when the interior components 3 to 6 are cup holders, action data of, for example, movements of hands and fingers when the occupants use the cup holders, locations of the hands and the fingers, and shapes and colors of the used objects held in the cup holders is stored in the memory 74.

The notification control unit 73 refers to the action data in the memory 74, and extracts the specific action corresponding to the action identified by the identification unit 72. When the specific action is successfully extracted, the notification control unit 73 determines a target interior component as a target of the specific action from the occupant who performs the specific action and the extracted specific action. For example, when the occupant reaches his/her hand to the cup holder, the notification control unit 73 extracts an action of the occupant's hand moving toward the cup holder and approaching the cup holder as the specific action. The notification control unit 73 determines the interior components 3 to 6 at a movement destination of the hand as the target interior components. The notification control unit 73, after extracting the specific action and determining the target interior component, outputs a notification command to the notification device 32 of the target interior component. Note that, when a plurality of the interior components 3 to 6 as the control targets of the controller 70 are present, the notification control unit 73 simply determines the target interior component among the plurality of interior components 3 to 6 on the basis of the extracted specific action. When one interior component as the control target is present, or when one out of the interior components 3 to 6 corresponding to the specific action is determined from the location of the seat of the occupant, the notification control unit 73 does not necessarily determine the target interior component among the plurality of interior components 3 to 6 on the basis of the extracted specific action.

The notification control unit 73 may determine the targe interior component from the used object of the occupant. For example, when the used object identified by the identification unit 72 is the beverage container, the cup holder that holds the beverage container is the target interior component. That is, the cup holder is associated with the beverage container, and the other interior components can also be associated with the used object of the occupant. The notification control unit 73 determines whether the action identified by the identification unit 72 is the specific action for the target interior component or not. When the identified action is the specific action for the target interior component, the notification control unit 73 outputs a notification command to the notification device 32 disposed corresponding to the target interior component. For example, after determining the cup holder as the target interior component, assume that the occupant has finished drinking based on the movement of the hand, and that the beverage container has moved away from his/her mouth. In such a case, the notification control unit 73 determines that the action identified from the movement of the hand and the locations of the mouth and the beverage container is the specific action for the cup holder, and outputs a notification command to the notification device of the cup holder used by the occupant.

The notification control unit 73 may change a notification configuration of the notification device 32 corresponding to a seat location of the occupant who has performed the action, states of the used objects housed in the interior components 3 to 6, brightness in the vehicle, a facial state of the occupant, and the like when the notification is output from the notification device 32. The following describes a specific example of a display configuration of the notification device 32. Note that the notification device 32 is a light (LED) similarly to FIG. 2.

The notification control unit 73 may determine the output destination of the notification command corresponding to locations of the parts, such as the occupant's hand, movements of the parts, an onboard location, and the like, when the target interior component as the target of the specific action includes a plurality of the housing portions 31. For example, as illustrated in FIG. 2, when the interior component 3 has the plurality of housing portions 31, and the plurality of housing portions 31 are disposed adjacent to one another, the occupant holds a container of a beverage or the like in his/her hand, and moves the container to any one of the housing portions 31. At this time, if a plurality of the devices 32 output notifications, the occupant may be confused about which housing portion 31 the container should be moved to. Therefore, the notification control unit 73 simply outputs the notification command to the notification device 32 disposed corresponding only to the housing portion 31 closer to the occupant who has performed the action.

The notification control unit 73 simply determines the housing portion 31 closer to the occupant who has performed the action among the plurality of housing portions 31 in the following manner. For example, when the identification unit 72 has identified the action from the hand, the notification control unit 73 determines the housing portion 31 closer to the hand among the plurality of housing portions 31 as the housing portion 31 of the action target. For example, the plurality of housing portions 31 are disposed associated with the seats, such as the driver's seat and the front passenger seat, the notification control unit 73 simply determines the housing portion 31 closer to the location of the occupant who has performed the action as the housing portion 31 of the action target. Thus, for example, when the occupant brings his/her hand closer to the housing portion 31 with the container being held in his/her hand, the notification device 32 near the housing portion 31 close to the hand outputs the notification. On the other hand, the notification device 32 near the housing portion 31 farther from the hand does not output the notification. Thus, the occupant can easily obtain the location of the housing portion 31 in which the container should be placed.

The notification control unit 73 may store usage information of the interior component 3 in a memory or the like. The usage information includes information of whether the interior component 3 is currently in use or not and/or information of usage history of the interior component 3. When the interior component 3 has the plurality of housing portions 31, the notification control unit 73 may store the usage information for each housing portion 31. Note that the usage information is indicated by a time at which the interior component 3 is used, a flag whether in use or not, a flag whether used in the past or not, and the like. For example, when the interior light is turned on, the usage information includes the fact that the interior light is in use. For example, when the interior component 3 (or the housing portion 31) is used between the present and before a predetermined time, a flag whether used in the past or not shows "1 (ON)."

The notification control unit 73 may record usage information for each occupant. For example, while an occupant on the driver's seat is using a ticket holder, an occupant on the front passenger seat uses a cup holder, the notification control unit 73 simply stores each of the usage information indicating that the occupant on the driver's seat has used the ticket holder and the usage information indicating that the occupant on the front passenger seat has used the cup holder.

When the target interior component as the target of the specific action includes the plurality of housing portions 31, the notification control unit 73 may determine the output destination of the notification command on the basis of the action for the interior component 3 and the usage information of the housing portions 31. The notification control unit 73 refers to the usage information of the housing portions 31 included in the target interior component, and extracts the housing portion 31 currently in use. The notification control unit 73 then outputs the notification command to the notification device 32 disposed corresponding to the housing portion 31 in use. That is, the notification control unit 73 outputs the notification command to the notification device 32 disposed corresponding to the housing portion 31 in use among the plurality of housing portions 31 when the action identified by the identification unit 72 is the specific action for the interior component 3 including the plurality of housing portions 31. Thus, for example, when the occupant reaches his/her hand to take an object housed in the housing portion 31, the notification device 32 corresponding to the housing portion 3 in use outputs the notification and the notification device 32 corresponding to the housing portion 3 not in use outputs no notification. As the result, the occupant can obtain the location of the housing portion 31 in a short time.

The notification control unit 73 refers to the usage information of the housing portions 31 included in the target interior component, and extracts the housing portion 31 that has been used last time. The notification control unit 73 then outputs the notification command to the notification device 32 disposed corresponding to the housing portion 31 that has been used last time. That is, when the action identified by the identification unit 72 is the specific action for the interior component 3 including the plurality of housing portions 31, the notification control unit 73 outputs the notification command to the notification device 32 disposed corresponding to the housing portion 31 that has been used last time among the plurality of housing portions 31. Thus, for example, when the occupant brings his/her hand closer to the housing portion 31 to house the used object in the housing portion 31, the notification device 32 corresponding to the housing portion 3 that has been used last time outputs the notification, and the notification devices 32 corresponding to the other housing portions 3 output no notifications. As the result, the occupant can obtain the location of the housing portion 31 in a short time.

The notification control unit 73 may output the notification command to the notification device 32 corresponding to the determination result by the identification unit 72 of whether the used object is held in the normal state in the interior component 3 or not. For example, when the beverage container is determined to be held in the normal state in the cup holder, the notification control unit 73 simply outputs a notification command to turn off the lighting of the notification device. Note that when the notification device 32 outputs the notification by sound or vibration, the notification control unit 73 may output the notification command to the notification device 32 to communicate using sound or vibration in order to indicate that the beverage container is normally housed in the cup holder.

The notification control unit 73 may set the notification configuration of the notification device 32 to a configuration different from the notification configuration at the normal state when the identification unit 72 determines that the beverage container is not held in the normal state in the cup holder. For example, when the lighting of the notification device 32 emits a blue colored light in the normal state, the lighting of the notification device 32 emits a red colored light not in the normal state.

When the lighting of the notification device 32 is turned on, the notification control unit 73 may increase a lighting on time corresponding to an elapsed time from the moment the lighting is turned on. In particular, if a bright light is emitted when the vehicle interior is dark, the gaze of the driver may abruptly be directed at the light emitting portion. Therefore, in the embodiment, the on time of the lighting is increased along the elapsed time, and the display configuration of the notification device 32 is changed so as to emit a dim light at the beginning and gradually emit a bright light. That is, an output value (luminance) of the notification (lighting) of the notification device 32 is set to a predetermined value or less, and the on time (irradiation on time) of the notification device 32 is increased to longer than the predetermined time, thereby increasing a time of illuminating the not bright lighting. Note that, for example, PWM control is simply used for controlling the on time.

The notification control unit 73 may output notification commands to the interior components 3 to 6 such that the interior components 3 to 6 are disposed for the respective plurality of seats, and the plurality of notification devices 32, 42, 52, 62 corresponding to the plurality of interior components 3 to 6 output notifications in respective different display configurations. For example, the lighting of the notification device 32 of the interior component 3 disposed at the driver's seat is set to dark, and the lighting of the notification devices 42, 52, 62 of the interior components 4 to 6 other than at the driver's seat are set to bright. The notification control unit 73 then outputs a notification command to the interior component 3 such that the lighting of the notification device 32 is set to dark when the interior component 3 is determined to be the target interior component as the target of the specific action. The notification control unit 73 outputs notification commands to the interior components 4 to 6 such that the lighting of the notification devices 42, 52, 62 is set to bright when the interior components 4 to 6 are determined to be the target interior component as the targets of the specific action.

The notification control unit 73 may control the brightness of the output light of the notification device corresponding to the illuminance in the vehicle interior. When the illuminance in the vehicle interior is low and the vehicle interior is dark, the notification control unit 73 outputs a notification command to the interior component 3 so as to darken the brightness of the output light of the notification device 32. At this time, the brightness of the output light (lighting) of the notification device 32 is only necessary to be a brightness that does not affect driving of the driver. Note that the notification control unit 73 may change a hue and/or a chroma instead of the brightness (lightness). For example, when the display configuration of the notification device 32 of the interior component 3 disposed at the driver's seat is controlled, the hue of the output light of the notification device 32 may be set to a red color.

The notification control unit 73 may control at least one element of a hue, a brightness, and a chroma of the output light of the notification device 32 corresponding to a facial state of the occupant identified by the identification unit 72. The facial state is, for example, represented by at least one parameter of an eye opening degree and a pupil constriction degree. For example, when the eye opening degree or the pupil constriction degree is low, the illuminance in the vehicle interior is low. Therefore, the notification control unit 73 outputs a notification command so as to provide a display configuration appropriate for the situation where the vehicle interior is dark. Specifically, the notification device 32 extracts the eye opening degree and/or the pupil constriction degree from the facial state identified by the identification unit 72. When the extracted eye opening degree and/or pupil constriction degree is equal to or less than a predetermined threshold, the notification control unit 73 outputs a notification command to the interior component 3 such that the output light of the notification device 32 has a display configuration appropriate for the situation where the vehicle interior is dark. The display configuration appropriate for the situation where the vehicle interior is dark is obtained by simply satisfying any one of, for example, a hue of a warm color, such as a red color or an orange color, a low brightness, and a low chroma. The brightness, the hue, and the chroma are conveniently set by a user.

The memory 74 saves the action data indicative of the specific actions. When there are a plurality of types of the interior components 3 to 6 as the control targets of the controller 70, the action data is saved corresponding to the types of the interior components 3 to 6. For example, when the interior components 3 to 6 are cup holders, the action data includes data of expected actions by the occupants when the cup holders are used, and data of expected actions by the occupants when beverage containers are held in their hands. That is, the action data includes the data regarding the actions by the occupants for the interior components 3 to 6, the data regarding the actions by the occupants currently using the used objects, and the like.

Next, a sequence of actions by an occupant and a notification method of the notification device 32 will be described using a cup holder as an example. When the occupant brings the beverage container closer to the cup holder while the occupant holds the beverage container in his/her hand, the notification device illuminates the lighting (lighting on). The occupant can easily confirm the location of the cup holder due to the light of the lighting, and therefore, can house the beverage container in the cup holder with a short-time gaze movement. When the beverage container is held in the normal state in the cup holder or the occupant's hand separates from the cup holder without holding the beverage container, the notification device turns off the lighting. When the occupant's hand approaches with the beverage container being held in the cup holder, the lighting of the notification device is turned on. When the beverage container comes off of the cup holder or the occupant's hand separates from the cup holder with the beverage container being held, the lighting of the notification device is turned off.

As illustrated in FIG. 2, when the cup holder as the interior component 3 has the plurality of housing portions 31, the notification device 32 may illuminate the lighting in the following example in response to the action of the occupant. For example, when the occupant brings the beverage container closer to the cup holder, the notification device 32 illuminates the lighting. At this time, only the notification device 32 closer to the occupant who has brought the beverage container closer to the cup holder among the plurality of cup holders may be illuminated. For example, in the example in FIG. 2, when the hand holding the beverage container moves from the right side on the paper toward the housing portion 31 on the right side, only the notification device 32 disposed at the housing portion 31 on the right side has the lighting illuminated.

As another example, when the occupant's hand approaches the cup holder in order for the occupant to drink the beverage with the beverage container being housed in the cup holder, the notification device 32 illuminates the lighting. At this time, only the notification device 32 of the housing portion 31 where the beverage container is housed may be illuminated. That is, only the notification device disposed corresponding to the housing portion 31 in use is turned on. For example, in the example in FIG. 2, when the beverage container is housed in the housing portion 31 on the right side, only the notification device 32 disposed at the housing portion 31 on the right side has the lighting illuminated.

As another example, when the occupant's hand approaches the cup holder in order for the occupant to drink the beverage with the beverage container being housed in the cup holder, the notification device 32 illuminates the lighting. At this time, only the notification device 32 of the housing portion 31 where the beverage container has been housed last time by the occupant who has brought his/her hand closer among the plurality of housing portions 31 may be illuminated. That is, only the notification device 32 disposed corresponding to the housing portion 31 that has been used last time is turned on. For example, in the example in FIG. 2, when the occupant houses the beverage container in the housing portion 31 on the left side, the housing portion 31 on the left side is the housing portion 31 that has been used last time. When the occupant brings his/her hand closer to the housing portion 31 on the left side, only the notification device 32 disposed at the housing portion 31 on the left side has the lighting illuminated. Note that the notification control unit 73 may turn on the notification device 32 of the housing portion 31 that has been used last time after determining that the occupant who has housed the beverage container in the housing portion 31 and the occupant who is taking out the beverage container from the housing portion 31 are the same.

In the example in which the interior component 3 has the plurality of housing portions 31 and the plurality of housing portions 31 are adjacent to one another as the above-described example, only the notification device 32 of the housing portion 31 that is more likely to be used by the occupant is illuminated and the notification device 32 that is less likely to be used is not illuminated. Thus, a notification confusable for the occupant, such as illumination of the notification device 32 with no beverage container being housed or illumination of the notification device 32 that has not been used last time, is avoidable.

The notification control unit 73 may change a display configuration of the notification device 32 corresponding to the determination result of whether the states of the used objects for the interior components 3 to 6 are normal states or not. Using the cup holder as an example, when the location of the beverage container is at an upper portion of the void portion 31a when the occupant holds the beverage container in his/her hand and moves it to the interior component 3, the identification unit 72 determines that the used object is in the normal state for the interior component 3. When the determination result by the identification unit 72 is the normal state, the notification control unit 73, for example, sets the lighting of the notification device to a blue color as a display configuration indicating the normal state. On the other hand, when the location of the beverage container is displaced from the upper portion of the void portion 31a, the identification unit 72 determines that the used object is not in the normal state for the interior component 3. When the determination result by the identification unit 72 is not in the normal state, the notification control unit 73, for example, sets the lighting of the notification device to a red color as a display configuration indicating the state that is not normal. When the location of the beverage container is displaced from the upper portion of the void portion 31a and the notification device 32 is illuminated in a color of the state that is not normal (e.g., a red color), the occupant does not put the beverage container down, but changes the location of the beverage container, and thus, adjusts the beverage container to an appropriate location. When the location of the beverage container obtains the appropriate location, the notification device 32 is illuminated in a color of the normal state (e.g., a blue color). Thereafter, the occupant puts the beverage container directly down at the location at which the notification device 32 is illuminated in the normal state color, and thus, can house the beverage container correctly.

That is, the identification unit 72 determines whether the state of the used object for the interior component 3 is in the normal state or not corresponding to the location and/or inclination of the used object, and the notification control unit 73 changes the notification configuration of the notification device 32 corresponding to the determination result of the identification unit 72. Thus, when the occupant moves the used object to the interior components 3 to 6, the occupant can confirm whether the location and/or inclination of the used object is normal or not from the notification of the notification device 32.

The identification unit 72 identifies such a sequence of action of the occupant from the captured image, and the notification control unit 73 determines whether the identified action is a specific action, and controls the notification device corresponding to the determination result. In the above-described notification example, the on time of the lighting of the notification device 32 is limited to a period in which the occupant uses the cup holder. In particular, when the vehicle interior is dark, reducing the light emission period of the lighting in the vehicle interior as short as possible allows for a reduced load on the driver. Note that the on time of the lighting of the notification device 32 is not necessarily limited to the period in which the occupant uses the cup holder, and for example, may include the period in which the occupant drinks the beverage. While the occupant drinks the beverage, it can be expected that, after drinking is finished, the beverage container is housed in the cup holder. Therefore, during the period in which the occupant drinks the beverage, the lighting of the notification device 32 is turned on, and thus, the beverage container can be easily housed in the cup holder.

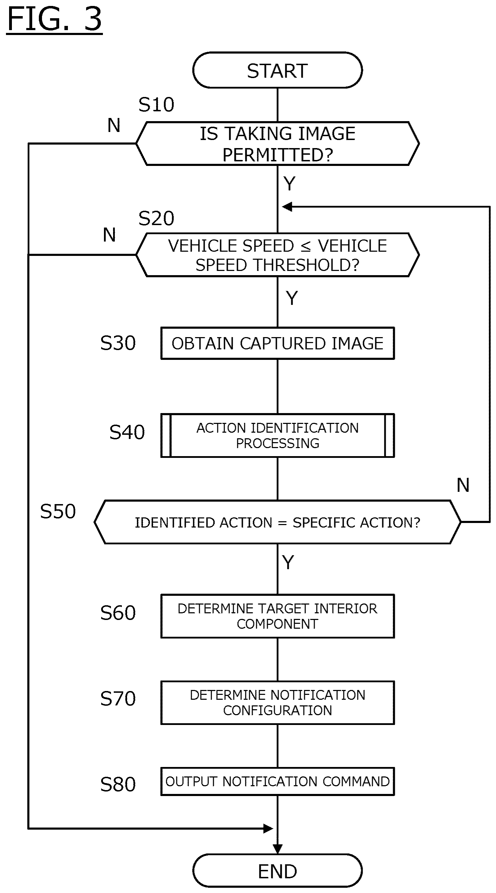

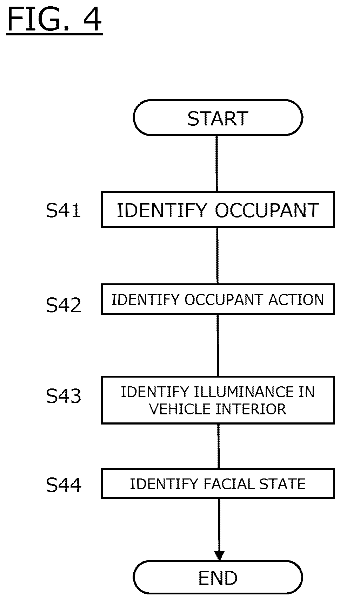

Next, using FIG. 3 and FIG. 4, a control flow of the controller 70 will be described. FIG. 3 is a flowchart showing control processing of the controller 70. FIG. 4 is a sub flowchart of Step S40 shown in FIG. 3.

At Step S10, the controller 70 determines whether taking images is permitted or not. For example, when taking images by the camera 1 is not permitted for protecting privacy, the controller 70 terminates this control flow ("N" at Step S10). On the other hand, when taking images is permitted, at Step S20, the notification control unit 73 obtains a vehicle speed from the vehicle speed sensor 2, and determines whether the current vehicle speed is equal to or less than the vehicle speed threshold or not. When the vehicle speed is higher than the vehicle speed threshold, the controller 70 terminates this control flow ("N" at Step S20). When the vehicle speed is equal to or less than the vehicle speed threshold, the image obtaining unit 71 obtains the captured image from the camera 1.

At Step S40, the identification unit 72 executes image processing on the captured image to execute action identification processing. The control flow of the action identification processing is shown by the subflow in FIG. 4. At Step S41, the identification unit 72 identifies the occupant. The identification of the occupant is, for example, an onboard position of the occupant. At Step S42, the identification unit 72 identifies an action of the occupant. At Step S43, the identification unit 72 identifies an illuminance in the vehicle interior. At Step S44, the identification unit 72 identifies a facial state of the occupant. After the subflow processing at Step S41 to Step S45 is terminated, the controller 70 then executes the control flow at Step S50.

At Step S50, the notification control unit 73 determines whether the identified action matches a specific action indicated by the action data in the memory 74 or not. When the identified action does not match the specific action, the controller 70 returns the control flow to Step S20, and executes the control flow at and after Step S20. When the identified action matches the specific action, the notification control unit 73 determines the target interior component as the target of the specific action at Step S60. At Step S70, the notification control unit 73 determines the notification configuration of the notification device 32 on the basis of at least any one of the location of the occupant, the illuminance in the vehicle interior, and a facial state. When the notification device is the lighting, the notification configuration corresponds to the display configuration. At Step S80, the notification control unit 73 outputs a notification command to the target interior component such that the notification device of the target interior component outputs a notification in the determined notification configuration. The controller 70 then terminates the control flow.

As described above, the interior component control device or the interior component control method according to the embodiment obtains a captured image from the camera 1 that captures an image of a vehicle interior, identifies an action of an occupant from the captured image, controls the notification device 32 disposed corresponding to the interior components 3 to 6 and outputs a notification recognizable by the occupant, and outputs a notification command to the notification device 32 to perform the notification when the identified action is a specific action for the interior component. Thus, an amount of time the occupant looks at the interior component can be reduced.

For example, using the cup holder as an example, before and the moment when the beverage container is housed in the cup holder, the notification is given from the notification device of the cup holder, and therefore, the occupant can recognize the housed location of the beverage container and the fact that the beverage container is surely housed. This reduces an operation load and a cognitive load falling on the occupant during an operation of searching for a cup holder in a dark vehicle interior, thereby allowing for enhanced interior comfort in the vehicle interior. As the result, the occupant's eye-off-road time can be reduced.

In the embodiment, the identification unit 72 identifies the used object of the occupant from the captured image, the notification control unit 73 determines the target interior component associated with the used object, and outputs the notification command to the notification device 32 disposed corresponding to the target interior component when the identified action is the specific action for the target interior component. This allows for a shortened amount of time the occupant looks at the interior component, that is, the eye-off-road time.

In the embodiment, the identification unit 72 determines whether the used object is held in the normal state in the target interior component or not on the basis of the captured image, and the notification control unit 73 outputs the notification command when a determination that the used object is held in the normal state in the target interior component is made. This allows the occupant to recognize that the used object is surely held in the interior components 3 to 6.

In the embodiment, when a determination that the used object is not held in the normal state in the target interior component is made, the notification control unit 73 sets the display configuration of the notification device 32 to the different configuration from the configuration at the normal state. This allows the occupant to recognize that the used object is not held normally in the interior components 3 to 6.

In the embodiment, the notification control unit 73 increases the on time of the notification corresponding to the elapsed time from the timing where the visually recognizable notification is turned on. This allows for reducing an effect on the driver caused by turning the notification on, for example, when the vehicle interior is dark.

In the embodiment, the interior components 3 to 6 are disposed for the respective plurality of seats, and the plurality of notification devices 32, 42, 52, 62 corresponding to the plurality of interior components output the notifications in respective different notification configurations. The notification control unit 73 then determines the target interior component as the target of the specific action among the plurality of interior components 3 to 6, and outputs the notification commands to the notification devices 32, 42, 52, 62 disposed corresponding to the target interior component. This allows for identifying the action of the occupant for each seat, and controlling the notification corresponding to the identified action for each seat.

In the embodiment, the notification control unit 73 does not output the notification command when the vehicle speed of the vehicle is equal to or more than the vehicle speed threshold. This allows for setting to inhibit the control of the interior component control device 7, for example, during running at high speed.

In the embodiment, the notification control unit 73 controls brightness of the output light of the notification device 32 corresponding to the illuminance in the vehicle interior. This allows for reducing an effect on the driver caused by turning the notification on, for example, when the vehicle interior is dark.

In the embodiment, the identification unit 72 identifies the facial state of the occupant from the captured image, and the notification control unit 73 controls at least one element of a hue, a brightness, and a chroma of the output light of the notification device 32 corresponding to the facial state. The facial state is represented by at least any one of the parameters of the eye opening degree and the pupil constriction degree. This allows for controlling the notification configuration corresponding to the vehicle interior space in a detailed manner.

Note that, in the embodiment, all the flows of the control flows shown in FIG. 3 and FIG. 4 are not necessarily executed, and a part of the flows may be omitted, or the sequence of the flows may be changed. For example, the controller 70 is only necessary to execute the control flows of at least Steps S30, S40, S50, and S80, and only necessary to execute at least S42 among the subflows of Step S40.

The interior component 3 does not necessarily have the housing portion 31, and is only necessary to have at least the notification device 32. For example, when the interior component 3 is lighting, such as a reading light or a footwell light, the housing portion 31 is not necessary.

Note that, as a modification example of the embodiment, a notification control unit 14 of a controller 10 turns on the lighting as the notification devices 32, 42, 52, 62 when the vehicle travels by autonomous driving control, and inhibits turning on the lighting when the vehicle travels by manual driving control. This allows for increased comfort for the driver during autonomous driving and avoiding a negative effect on driving of the driver due to turning-on of the lighting during manual driving.

### Second Embodiment

Next, an interior component control system according to a second embodiment will be described. The interior component control system according to the second embodiment adds a part of a controlling function to the identification unit 72 with respect to the interior component control system according to the first embodiment described above. Except for the added functions of the identification unit 72, the second embodiment has the same configuration as that of the first embodiment, the description described above is cited for the same configuration as that of the first embodiment.

The interior components 3 to 6 have at least the notification devices 32, 42, 52, 62. Note that, in the following description, the interior component 3 is used as a typical example of the interior components 3 to 6, and the notification device 32 is used as a typical example of the notification devices 32, 42, 52, 62. The interior component 3 is, for example, a footwell light (lighting) that illuminates a foot area of the occupant, and is installed right and left seats in the front (front passenger seat, driver's seat) and right and left seats in the rear. The camera 1 is installed at a position such that a view angle includes seats. Therefore, the camera 1 is installed at a position such that the view angle of the camera 1 includes a part of a body of the occupant when the occupant sits on a seat. For example, the view angle of the camera 1 includes at least an upper body of the occupant and does not include a foot area of the occupant in a state where the occupant sits on the seat. Note that, in order to capture images of an occupant on a rear seat, the camera 1 is only necessary to be installed on a roof (a ceiling in vehicle interior). Alternatively, the camera 1 may be a wide-angle camera so as to capture rear seat surfaces.

The identification unit 72 identifies a trajectory of the body when a part of the body of the occupant moves out of the view angle of the camera 1. One example is, for example, a situation where the occupant bends down from a state of sitting on the seat to pick up an object at a foot area (hereinafter also referred to as "situation of picking up an object"). In this situation, when the occupant bends down from the sitting state, the upper body of the occupant moves downward with respect to the seat. The identification unit 72 obtains captured images in chronological order to extract the movement of the part (the upper body) of the occupant from a plurality of the captured images, thereby identifying the trajectory of the upper body of the occupant. For example, when the center of the view angle of the camera 1 is the center of the upper body of the occupant, the trajectory of the upper body makes a line along a downward direction from a center point of the view angle when the situation is picking up an object. Thus, the identification unit 72 identifies the action of the occupant when a part of the body of the occupant moves out of the view angle of the camera 1.

The notification control unit 73 outputs a notification command to the notification device 32 corresponding to the trajectory of the body identified by the identification unit 72. First, the notification control unit 73 identifies the direction in which the trajectory of the body moves out of the view angle (hereinafter also referred to as a "direction out of view angle"). The notification control unit 73 then outputs a notification command to turn the lighting on to the notification device 32 positioned in the direction out of view angle. The notification device 32 as a transmission destination of the notification command is installed outside of the view angle of the camera 1 and in a region in the direction out of view angle. The notification control unit 73 identifies a lower portion of the seat as the direction out of view angle when the situation is picking up an object. The notification control unit 73 outputs the notification command to turn on the footwell light to the footwell light installed in a foot area of the bending occupant. That is, the notification control unit 73 identifies the notification device 32 installed outside of the view angle of the camera 1 and in the region in the direction out of view angle as the device of the transmission destination of the notification command from the trajectory of the body. Thus, the foot area is illuminated when the occupant bends down for picking up an object.

As an example other than the situation of picking up an object, assume that the driver reaches out for taking an object inside a roof pocket while the vehicle is stopped. The hand of the driver moves from the position of a steering wheel toward the roof pocket. The identification unit 72 identifies a trajectory of the hand by extracting the movement of the hand. The notification control unit 73 identifies the direction from the position of the steering wheel toward the roof pocket as the direction out of view angle. The direction out of view angle is a direction in which the trajectory of the hand moves out of the view angle. The notification control unit 73 outputs the notification command to turn on the lighting to the lighting (a room lamp) installed in the view angle direction. Thus, the lighting installed in the proximity of the roof pocket is turned on before the hand touches the roof pocket when the driver tries to take an object inside the roof pocket.

The identification unit 72 identifies that a part of the body of the occupant returns in the view angle after the part of the body of the occupant moves out of the view angle of the camera 1. For example, after the situation of picking up an object, the occupant returns his/her upper body to the original position once picking up an object, and the occupant has a posture of sitting on the seat. At this time, the upper body once moves out of the view angle to pick an object up, and the upper body returns in the view angle. The identification unit 72 identifies that the upper body returns in the view angle. That is, the identification unit 72 identifies that the upper body moves out of the view angle and then returns in the view angle from a sequence of the upper body movements.

The notification control unit 73 outputs an off command to turn the notification off to the notification device when identifying that the part of the body of the occupant returns in the view angle. When the occupant picks up an object in the foot area, and then returns the posture to the original sitting state, the notification control unit 73 outputs an off command to turn the lighting of the footwell light off when identifying that the upper body returns in the view angle. Note that the notification control unit 73 may output the off command to the footwell light after an elapse of a predetermined time from the time point when the upper body returning in the view angle is identified. This allows switching on and off of the notification by the notification device 32 corresponding to the action of the occupant.

Note that the notification control unit 73 may output the off command to the notification device when the predetermined time has elapsed from the time point when the part of the body of an occupant moves out of the view angle of the camera 1 is identified. This allows turning the notification by the notification device 32 off even when the part of the body of the occupant returning in the view angle is not identifiable from the captured images.

As described above, the interior component control device or the interior component control method according to the embodiment identifies a trajectory of a body when a part of the body of the occupant moves out of a view angle of the camera 1, and outputs a notification command to the notification device 32 corresponding to the identified trajectory of the body. This allows identifying that an action of the occupant is a specific action for the interior component 3 even when the interior component 3 is installed outside of the view angle of the camera 1.

### Description of Reference Numerals

1 Camera
2 Vehicle speed sensor
3 to 6 Interior component (cup holder)
7 Interior component control device
32, 42, 52, 62 Notification device
70 Controller
71 Image obtaining unit
72 Identification unit
73 Notification control unit
74 Memory

## Claims

1. An interior component control device that controls an interior component disposed in a vehicle interior, the interior component control device comprising:
an image obtaining unit that obtains a captured image from a camera that captures an image of the vehicle interior;
an identification unit that identifies an action of an occupant from the captured image; and
a notification control unit that controls a notification device that is disposed corresponding to the interior component and outputs a notification recognizable by the occupant, wherein
the notification control unit outputs a notification command to the notification device to perform the notification when the action identified by the identification unit is a specific action for the interior component.

2. The interior component control device according to claim 1, wherein
the identification unit identifies a used object of the occupant from the captured image, and
the notification control unit:
determines a target interior component associated with the used object; and
outputs the notification command to the notification device disposed corresponding to the target interior component when the action identified by the identification unit is the specific action for the target interior component.

3. The interior component control device according to claim 2, wherein
the identification unit determines whether the used object is held in a normal state in the target interior component or not based on the captured image, and
the notification control unit outputs the notification command when the used object is determined to be held in the normal state in the target interior component.

4. The interior component control device according to claim 3, wherein
the notification control unit sets a notification configuration of the notification device to a configuration different from a configuration at the normal state when the used object is determined not to be held in the normal state in the target interior component.

5. The interior component control device according to any one of claims 1 to 4, wherein
the notification is visually recognizable, and
the notification control unit increases an on time of the notification corresponding to an elapsed time from a time point when the notification is turned on.

6. The interior component control device according to any one of claims 1 to 4, wherein
the notification is recognizable by at least one sense of visual, auditory, olfactory, or tactile.

7. The interior component control device according to claim 1, wherein
the interior component is disposed for each of a plurality of seats,
a plurality of the notification devices corresponding to a plurality of the interior components output the notifications in respective different notification configurations, and
the notification control unit determines a target interior component as a target of the specific action among the plurality of interior components, and outputs the notification command to the notification device disposed corresponding to the target interior component.

8. The interior component control device according to any one of claims 1 to 7, wherein
the notification control unit does not output the notification command when a vehicle speed is equal to or more than a vehicle speed threshold.

9. The interior component control device according to any one of claims 1 to 8, wherein
the notification control unit controls brightness of an output light of the notification device corresponding to illuminance in the vehicle interior.

10. The interior component control device according to any one of claims 1 to 9, wherein
the identification unit identifies a facial state of the occupant from the captured image, and
the notification control unit controls at least one element of a hue, a brightness, and a chroma of the output light of the notification device corresponding to the facial state.

11. The interior component control device according to claim 10, wherein
the facial state is represented by at least any one parameter of an eye opening degree and a pupil constriction degree.

12. The interior component control device according to any one of claims 1 to 11, wherein
the identification unit identifies a trajectory of a body when a part of the body of the occupant moves out of a view angle of the camera, and
the notification control unit outputs the notification command to the notification device corresponding to the trajectory of the body identified by the identification unit.

13. The interior component control device according to claim 12, wherein
the notification control unit identifies a direction the trajectory of the body moves out of the view angle, and outputs the notification command to the notification device located in the direction moving out of the view angle.

14. The interior component control device according to claim 13, wherein
the view angle of the camera includes at least a seat of a vehicle,
the notification device includes a footwell light that illuminates a foot area of the occupant, and
the notification control unit outputs the notification command to the footwell light when the direction moving out of the view angle is downward with respect to the seat.

15. The interior component control device according to claim 13 or 14, wherein
the identification unit identifies that a part of the body of the occupant returns in the view angle after the part of the body of the occupant moves out of the view angle of the camera, and
the notification control unit outputs an off command to turn off the notification to the notification device when identifying that the part of the body of the occupant returns in the view angle.

16. The interior component control device according to any one of claims 12 to 15,
wherein
the identification unit outputs an off command to turn off the notification to the notification device when a predetermined time elapses from a time point when the part of the body of the occupant is identified as moving out of the view angle of the camera.

17. The interior component control device according to any one of claims 1 to 16, wherein
the notification device is the lighting, and
the notification control unit:
turns on the lighting when the vehicle travels by autonomous driving control; and
inhibits turning on of the lighting when the vehicle travels by manual driving control.

18. The interior component control device according to any one of claims 1 to 17, wherein
the interior component has a plurality of housing portions that house used objects of the occupant, and
when the action identified by the identification unit is the specific action for the interior component including the plurality of housing portions, the notification control unit outputs the notification command to the notification device disposed corresponding to the housing portion closer to the occupant who has performed the specific action among the plurality of housing portions.

19. The interior component control device according to any one of claims 1 to 17, wherein
the interior component has a plurality of housing portions that house used objects of the occupant, and
when the action identified by the identification unit is the specific action for the interior component including the plurality of housing portions, the notification control unit outputs the notification command to the notification device disposed corresponding to the housing portion in use among the plurality of housing portions.

20. The interior component control device according to any one of claims 1 to 17, wherein
the interior component has a plurality of housing portions that house used objects of the occupant, and
when the action identified by the identification unit is the specific action for the interior component including the plurality of housing portions, the notification control unit outputs the notification command to the notification device disposed corresponding to the housing portion that has been used last time among the plurality of housing portions.

21. The interior component control device according to claim 2, wherein
the identification unit determines whether a state of the used object for the interior component is a normal state or not corresponding to a location and/or an inclination of the used object, and
the notification control unit changes a notification configuration of the notification device corresponding to a determination result of the identification unit.

22. An interior component control method that controls an interior component disposed in a vehicle interior, the interior component placing or holding a used object of an occupant, the interior component control method comprising, by a controller:
obtaining a captured image from a camera that captures an image of the vehicle interior;
identifying an action of the occupant from the captured image;
controlling a notification device disposed corresponding to the interior component and outputs a notification recognizable by the occupant; and
outputting a notification command to the notification device to perform the notification when the identified action is a specific action for the interior component.
